# EUROPEAN PATENT APPLICATION

(11) **EP 3 214 304 A1**
(43) Date of publication of application: **06.09.2017**
(21) Application number: 15855534.2
(22) Date of filing: 29.10.2015
(51) Int. Cl.: F03D 7/02, F03D 1/06, F03D 1/02

(54) **PASSIVE BLADE PITCH CONTROL MODULE**

(30) Priority: 30.10.2014 KR 20140148926; 07.10.2015 KR 20150140674; 07.10.2015 KR 20150140676
(71) Applicant: Lee, Ji Hyun, Daejeon 34033 (KR)
(72) Inventor: Lee, Ji Hyun, Daejeon 34033 (KR)
(74) Representative: Ferro, Frodo Nunes
(86) International application number: PCT/KR2015/011496
(87) International publication number: WO 2016/068618

(57) **Abstract**

Disclosed is a passive blade pitch control module. An embodiment of the present invention provides a passive blade pitch control module comprising: a body part which includes a center column and is connected to a rotation shaft of a wind power generator; one or more rotation blocks which are coupled to the body part so as to be rotatable about a pitch axis and to which a blade is mounted and supported; a link plate which is coupled to the center column so as to be movable along the center column and is eccentrically coupled to the rotation blocks with respect to the pitch axis; and a spring for elastically supporting the link plate.

## Description

### [Technical Field]

The present invention relates to a blade pitch control module capable of adjusting a blade pitch angle of a wind power generator.

### [Background Art]

In general, a wind power generator converts rotational force of blades, which is generated by wind, into electrical energy, and the advantage of the wind power generator is that the wind power generator does not emit carbon dioxide and thus does not cause pollution, costs for power generation is not incurred because natural wind is used, and initial equipment costs are low compared to other energy sources. In the wind power generator, wind with an appropriate velocity is advantageous in producing electric power by means of the wind power generator, but typically, a wind velocity is not always maintained appropriately, but strong wind or an instantaneous gust of wind, which may damage the blade of the wind power generator, suddenly occurs, or wind with a low velocity, which may cause deterioration in electric power production, may occur. In particular, wind, such as the strong wind or the instantaneous gust of wind with a rating wind velocity or higher, damages the blades of the wind power generator by exerting an overload on the blades, damages connecting portions between the blades and a hub, or permanently changes pitch angles of the blades, which causes deterioration of efficiency of the wind power generator.

For this reason, a pitch control device, which may adjust the pitch angle of the blade in accordance with a wind velocity or the like, is installed in the wind power generator. Typically, the pitch control device of the wind power generator adjusts the pitch angle in accordance with a wind velocity by tilting the blade by using hydraulic pressure or driving power of an electric motor or the like. However, most of the pitch control devices in the related art are expensive and thus are limitedly applied to some large-sized wind power generators, and because of a complicated internal structure of the pitch control device, there is a problem in that it is difficult to use or maintain the pitch control device.

### [Disclosure]

### [Technical Problem]

The exemplary embodiments of the present invention provide a passive blade pitch control module capable of effectively preventing damage to a blade at a limit wind velocity or higher.

In addition, the exemplary embodiments of the present invention provide a passive blade pitch control module capable of adjusting a pitch angle of a blade to an optimum pitch in accordance with a change in wind velocity or wind pressure.

In addition, the exemplary embodiments of the present invention provide a passive blade pitch control module capable of being easily manufactured and installed, and implemented even with low costs.

In addition, the exemplary embodiments of the present invention provide a passive blade pitch control module capable of being conveniently used and maintained.

In addition, the exemplary embodiments of the present invention provide a passive blade pitch control module capable of improving efficiency and quality of power generation by stabilizing a rotational speed of a blade.

In addition, the exemplary embodiments of the present invention provide a passive blade pitch control module having a function of adjusting a pitch angle in accordance with a rotational speed of a blade.

In addition, the exemplary embodiments of the present invention provide a passive blade pitch control module capable of easily setting an initial pitch angle (pitch angle in a state in which no wind load is applied) of a blade.

### [Technical Solution]

According to an aspect of the present invention, there is provided a passive blade pitch control module including: a body part which has a center column and is connected to a rotation shaft of a wind power generator; one or more rotation blocks which are fastened to the body part so as to be rotatable about pitch axes, respectively, and on which blades are mounted and supported; a link plate which is fastened to the center column so as to be movable along the center column and eccentrically coupled to the rotation block with respect to the pitch axis; and a spring which elastically supports the link plate.

### [Advantageous Effects]

The passive blade pitch control module according to the exemplary embodiments of the present invention is formed to transmit a wind load, which is applied to the blade, to the compressive spring via the rotation block and the link plate, such that the blade is adjusted to have an appropriate pitch angle by a balance between elastic force of the compressive spring and a wind load on the blade. Therefore, the passive blade pitch control module according to the exemplary embodiments of the present invention may effectively prevent damage to the blade by appropriately adjusting the pitch angle of the blade in a case in which a wind load, such as a gust of wind or a typhoon, which is equal to or higher than a set value, is applied.

In addition, the passive blade pitch control module according to the exemplary embodiments of the present invention may naturally adjust a pitch angle by elastic force of the compressive spring without an external forced driving source, and as a result, the passive blade pitch control module may be more conveniently used or maintained.

In addition, the passive blade pitch control module according to the exemplary embodiments of the present invention may be easily designed because the pitch angle of the blade may be adjusted only by appropriately setting a compression degree or an elastic modulus of the compressive spring, and the passive blade pitch control module may be easily designed to a type in which the pitch angle is continuously adjusted corresponding to a wind load as necessary, and as a result, the passive blade pitch control module is advantageous in improving rotational speed stabilization or power generation quality of the wind power generator.

In addition, because a separate hydraulic means, actuator, or the like is not required to adjust the pitch angle, the passive blade pitch control module according to the exemplary embodiments of the present invention may be manufactured with comparatively low costs, and particularly, a pitch control function may be implemented with low costs even in the case of a small-sized wind power generator in which it is difficult to apply a high-priced pitch control means in practice.

In addition, the passive blade pitch control module according to the exemplary embodiments of the present invention may appropriately adjust the pitch angle in accordance with the rotational speed of the blade as well as the wind load applied to the blade (i.e., force that rotates the blade about the pitch axis). Therefore, it is possible to more precisely and effectively control a pitch angle of the blade.

In addition, the passive blade pitch control module according to the exemplary embodiments of the present invention does not require an external forced driving source even though the function of adjusting a pitch angle in accordance with a rotational speed is added. That is, the passive blade pitch control module according to the exemplary embodiments of the present invention does not require a separate forced driving source for adjusting a pitch angle because a pitch angle is naturally adjusted in a state in which a wind load applied to the blade or centrifugal force according to a rotational speed is balanced with elastic force of the compressive spring. Therefore, the passive blade pitch control module according to the exemplary embodiments of the present invention may be implemented with low costs, and may be easily applied even to a middle-sized or small-sized wind power generator.

Furthermore, the passive blade pitch control module according to the exemplary embodiments of the present invention has an advantage in that because control of a pitch angle is implemented only by comparatively restrictive elements such as an elastic modulus of the compressive spring and a weight of the balance weight, a design value for deriving required performance is easily set, and manufacturing and maintenance are also easily performed.

In addition, the passive blade pitch control module according to the exemplary embodiments of the present invention may appropriately set an initial pitch angle by means of the initial pitch angle setting unit even in an initial state in which no wind load is applied.

### [Description of Drawings]

FIG. 1 is a perspective view illustrating a passive blade pitch control module according to a first exemplary embodiment of the present invention.
FIG. 2 is a perspective view illustrating a state in which one side of a body part of the passive blade pitch control module illustrated in FIG. 1 is omitted.
FIG. 3 is a perspective view illustrating the body part illustrated in FIG. 2.
FIG. 4 is a perspective view illustrating a rotation block illustrated in FIG. 2.
FIG. 5 is a perspective view illustrating a link plate illustrated in FIG. 2.
FIG. 6 is a view illustrating an operation of the passive blade pitch control module illustrated in FIG. 1.
FIG. 7 is a perspective view illustrating a passive blade pitch control module according to a second exemplary embodiment of the present invention.
FIG. 8 is a schematic side view of the passive blade pitch control module illustrated in FIG. 7.
FIG. 9 is a schematic rear view illustrating a passive blade pitch control module according to a third exemplary embodiment of the present invention.
FIG. 10 is a schematic cross-sectional view taken along line A-A illustrated in FIG. 9.

### [Modes of the Invention]

Hereinafter, exemplary embodiments of the present invention will be described with reference to the accompanying drawings. However, it is noted that the exemplary embodiments are provided to help understand the present invention, and the scope of the present invention is not limited to the following exemplary embodiments. In addition, the following exemplary embodiments are provided for more completely explaining the present invention to those skilled in the art, and the detailed descriptions of publicly known configurations will be omitted when it is determined that the detailed descriptions may unnecessarily obscure the technical subject matter of the present invention.

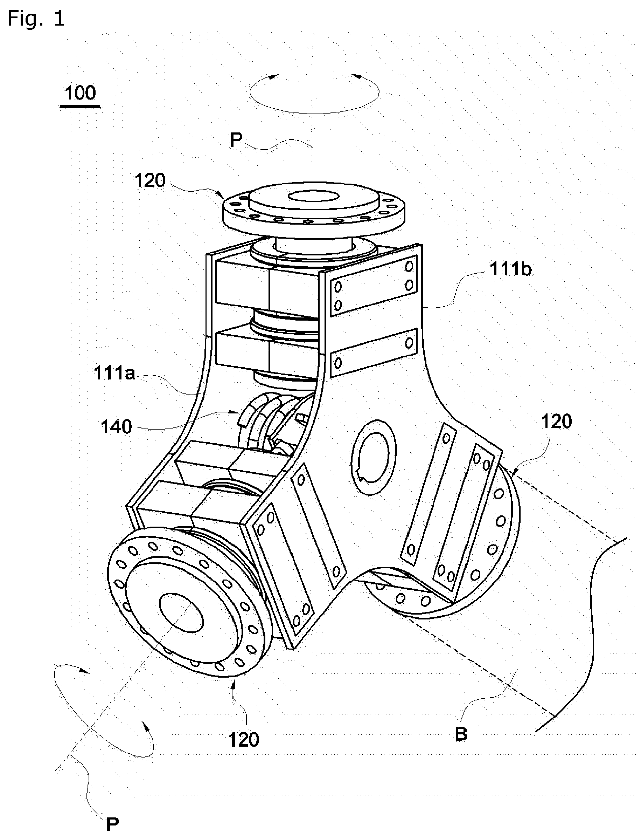

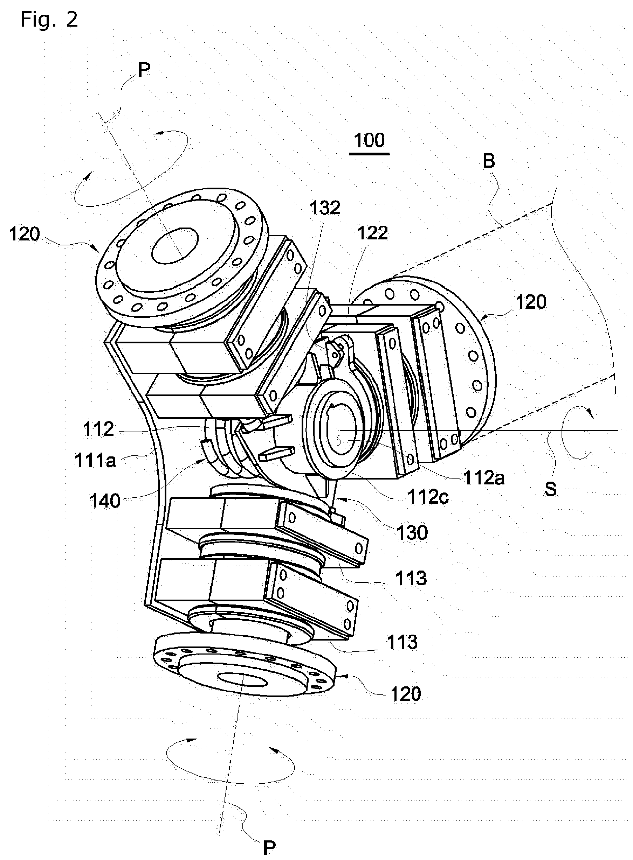

FIG. 1 is a perspective view illustrating a passive blade pitch control module according to a first exemplary embodiment of the present invention. FIG. 2 is a perspective view illustrating a state in which one side of a body part of the passive blade pitch control module illustrated in FIG. 1 is omitted.

Referring to FIGS. 1 and 2, a passive blade pitch control module (hereinafter, referred to as a 'pitch control module 100') according to the present exemplary embodiment may include a body part 110, a plurality of rotation blocks 120 which are rotatably mounted on the body part 110 respectively, a link plate 130 which is disposed at a center of the plurality of rotation blocks 120 and linked to end portions of the respective rotation blocks 120, and a compressive spring 140 which elastically supports the link plate 130.

The body part 110 is entirely connected to a rotation shaft S of a wind power generator and transmits rotational driving power to the rotation shaft S, and blades B may be mounted on the respective rotation blocks 120. In addition, the rotation blocks 120 rotate with respect to the body part 110, thereby adjusting pitch angles of the blades B. In this case, the rotation of the rotation block 120 or the adjustment of the pitch angle of the blade B may be naturally adjusted in accordance with equilibrium of force between elastic force of the compressive spring 140, which supports the link plate 130, and a wind load applied to the blade B.

Hereinafter, the aforementioned configurations will be described in more detail.

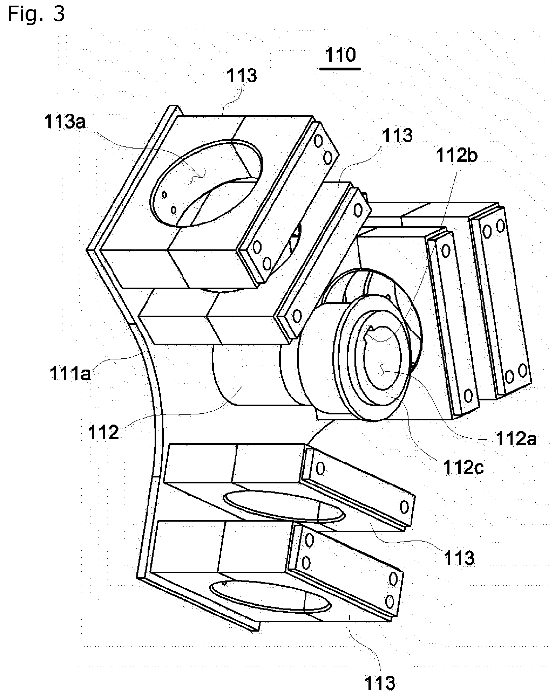

FIG. 3 is a perspective view illustrating the body part illustrated in FIG. 2.

Referring to FIG. 3 and the aforementioned FIGS. 1 and 2, the pitch control module 100 according to the present exemplary embodiment may include the body part 110. The body part 110 defines an entire external appearance of the pitch control module 100, and may provide a basic framework on which the rotation blocks 120 to be described below and the like may be mounted and supported.

More specifically, the body part 110 may have a pair of plates 111 a and 111b disposed to face each other. The pair of plates 111 a and 111b may be formed to have shapes corresponding to each other, and may be disposed to be spaced apart from each other at a predetermined interval. The respective plates 111 a and 111b may be formed in various shapes, but may be formed to have a shape corresponding to the number of rotation blocks 120 or the arrangement of the rotation blocks 120, as necessary. For example, the present exemplary embodiment provides an example in which each of the plates 111a and 111b has an approximately 'Y' shape in a plan view so as to correspond to the three rotation blocks 120 disposed radially. However, the shape of each of the plates 111 a and 111b may of course be variously changed, as necessary. For example, in a case in which four rotation blocks 120 are disposed radially, each of the plates 111a and 111b may be formed in a '†' shape or the like.

In addition, the body part 110 may have a center column 112 disposed at a central portion of the pair of plates 111a and 111b. The center column 112 may extend to a predetermined extent between the respective plates 111 a and 111b that face each other, and the center column 112 may be disposed to be approximately orthogonal to a flat surface of each of the plates 111 a and 111b. The center column 112 may have a rotation shaft fastening hole 112a so as to be connected to the rotation shaft S of the wind power generator. The rotation shaft fastening hole 112a extends to a predetermined extent in a longitudinal direction of the center column 112 such that the rotation shaft S may be inserted and fastened to the rotation shaft fastening hole 112a, and a key groove 112b may be provided at one side of the rotation shaft fastening hole 112a. The body part 110 is connected to the rotation shaft S of the wind power generator through the rotation shaft fastening hole 112a so as to be able to rotate together with the rotation shaft S, and transmits rotational driving power to the rotation shaft S. In addition, a stopper 112c may be provided at one end of the center column 112, and the stopper 112c prevents the link plate 130 to be described below from being withdrawn by the compressive spring 140.

Meanwhile, support blocks 113 for mounting and supporting the rotation blocks 120 may be provided on the body part 110. The support blocks 113 are disposed between the pair of plates 111a and 111b and support the rotation blocks 120 on which the blades B are mounted, and the support blocks 113 assist the rotational motions of the respective rotation blocks 120 about pitch axes P. The plurality of support blocks 113 may be provided to correspond to the number of rotation blocks 120 mounted on the body part 110, and the plurality of support blocks 113 may be provided for each rotation block 120. For example, the present exemplary embodiment provides an example in which two support blocks 113 are provided for each rotation block 120, such that a total of six support blocks 113 are provided. However, the number of support blocks 113 may of course be increased or decreased, as necessary. Each of the support blocks 113 may be formed in an approximately rectangular parallelepiped shape, and may have a rotation block fastening hole 113a formed at a center of each of the support blocks 113 so that the rotation block 120 may be inserted and fastened to the rotation block fastening hole 113a. The rotation block 120 to be described below is in contact with and slides on an inner circumferential surface of the rotation block fastening hole 113a, and thus the rotation block 120 may rotate to a predetermined extent about the pitch axis P.

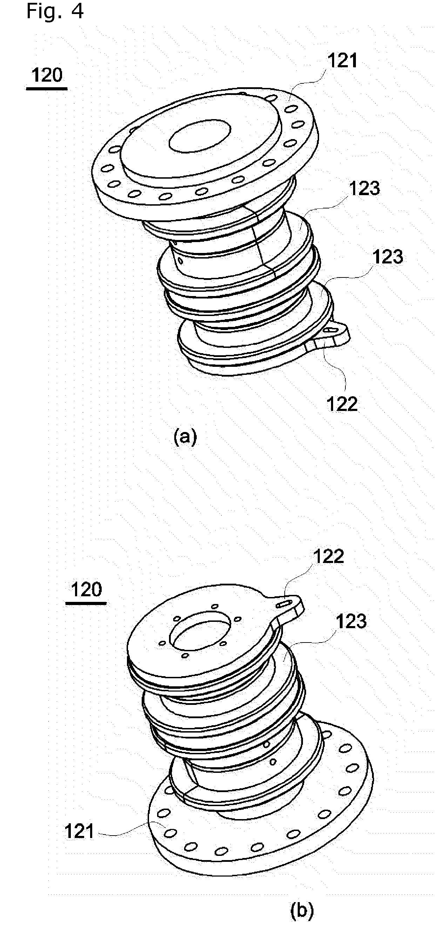

FIG. 4 is a perspective view illustrating the rotation block illustrated in FIG. 2.

Referring to FIG. 4 and the aforementioned FIGS. 1 and 2, the pitch control module 100 according to the present exemplary embodiment may have the plurality of rotation blocks 120. The plurality of rotation blocks 120 may be provided in accordance with the number of blades B, and the present exemplary embodiment provides an example in which three rotation blocks 120 are provided to correspond to three blades B. However, the number of rotation blocks 120 may of course be increased or decreased (for example, two or four rotation blocks) in accordance with the number of blades B. The rotation blocks 120 may be fastened to the blades B, respectively, such that the rotation blocks 120 are rotated about the pitch axes P, respectively, in a state in which the blades B are mounted on the rotation blocks 120, respectively, and as a result, the pitch angles of the blades B are adjusted.

More specifically, each of the rotation blocks 120 is formed in an approximately cylindrical shape, one end of the rotation block 120 is disposed to be directed toward the center column 112, and the blade B is mounted and installed on the other end of the rotation block 120. That is, the plurality of rotation blocks 120 may be radially disposed about the center column 112 at the center of the body part 110. In other words, each of the rotation blocks 120 may be disposed in a radial direction based on the center column 112.

A link plate fastening portion 122 to be fastened to the link plate 130 to be described below may be provided at one end of each of the rotation blocks 120 (i.e., an inner end directed toward the center column 112 in the radial direction). The link plate fastening portion 122 may be fastened to the rotation block fastening portion 132 of the link plate 130 by means of a pin or the like, and as a result, forward and rearward movements of the link plate 130 may be transmitted to each of the rotation blocks 120. The transmission of the forward and rearward movements of the link plate 130 will be additionally described in connection with the link plate 130. Meanwhile, a blade fastening portion 121 to be fastened to the blade B may be provided at the other end of each of the rotation blocks 120. The blade fastening portion 121 may be formed in the form of a flange at the other end of each of the rotation blocks 120 such that the blade B may be coupled to the blade fastening portion 121 by bolting, and each of the blades B is fixedly coupled to each of the rotation blocks 120 by means of the blade fastening portion 121 such that the blade B may be rotated about the pitch axis P together with the rotation block 120.

Meanwhile, each of the rotation blocks 120 may be mounted and supported by the support block 113. In this case, an outer circumferential surface of each of the rotation blocks 120 are in contact with and slides on the support block 113, such that each of the rotation blocks 120 may be rotated about the pitch axis P. Sliding pads 123 may be provided on the outer circumferential surface of the rotation block 120 so that the rotation block 120 may be smoothly rotated. The sliding pad 123 is formed in the form of a ring so as to surround the outer circumferential surface of the rotation block 120, and may be in contact with and may slide on the support block 113. The sliding pad 123 may be made of various materials, and more particularly, a part of or the entire contact surface may be made of a Teflon material. The advantage of use of the Teflon material is that contact frictional force of the sliding pad 123 is reduced, the rotation block 120 may be smoothly rotated about the pitch axis P, and thus durability is also excellent. Furthermore, in the case of the pitch control module 100 according to the present exemplary embodiment, the surface-to-surface contact type support block 113 or the surface-to-surface contact type sliding pad 123 is used instead of a point-to-point contact type ball bearing which is typically used, thereby simplifying a device structure and minimizing damage to the device or a malfunction of the device which is caused by a local load or the like.

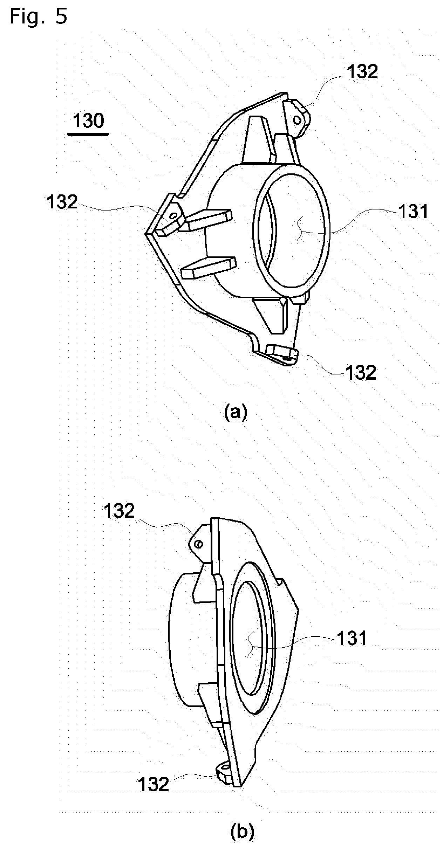

FIG. 5 is a perspective view illustrating the link plate illustrated in FIG. 2.

Referring to FIG. 5 and the aforementioned FIGS. 1 and 2, the pitch control module 100 according to the present exemplary embodiment may have the link plate 130. The link plate 130 transmits elastic force of the compressive spring 140 to the respective rotation blocks 120, and enables the pitch angle of the blade B to be adjusted by a balance between elastic force of the compressive spring 140 and a wind load on the blade B mounted on each of the rotation blocks 120.

More specifically, the link plate 130 has a column fastening hole 131 at a center thereof, and may be inserted and fastened to the center column 112. In addition, the link plate 130 may move forward and rearward along the center column 112. In this case, the stopper 112c at one end of the center column 112 restricts the movement of the link plate 130 so that the link plate 130 is not completely withdrawn from the center column 112, and as a result, the link plate 130 is elastically supported by the compressive spring 140 between the stopper 112c and the compressive spring 140 to be described below.

Meanwhile, the link plate 130 may have a plurality of rotation block fastening portions 132 which are disposed along an outer circumference of the link plate 130 so as to be spaced apart from one another at a predetermined interval. The number of rotation block fastening portions 132 corresponds to the number of rotation blocks 120 radially disposed on the body part 110, and the present exemplary embodiment provides an example in which a total of three rotation block fastening portions 132 are provided on the link plate 130. However, the number of rotation block fastening portions 132 may of course be increased or decreased in accordance with the number of rotation blocks 120 or the number of blades B. The rotation block fastening portions 132 may be coupled to the corresponding link plate fastening portions 122 of the rotation blocks 120, respectively, by pins or the like. In this case, the rotation block fastening portions 132 and the link plate fastening portions 122 may be fastened to one another so as to be rotatable to a predetermined extent (for example, coupled by the pins). For this reason, when the link plate 130 moves forward and rearward along the center column 112, the rotation blocks 120 are rotated about the pitch axes P to a predetermined extent, respectively, in conjunction with the movement of the link plate 130. The rotations of the rotation blocks 120 will be additionally described in connection with an operation of the present exemplary embodiment to be described below.

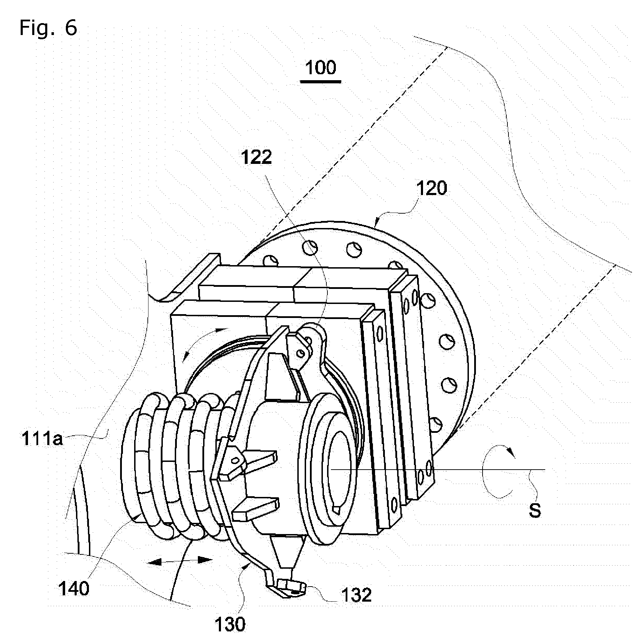

Meanwhile, referring to the aforementioned FIGS. 1 and 2, the pitch control module 100 according to the present exemplary embodiment may have the compressive spring 140. The compressive spring 140 may be fastened to the center column 112 and interposed between the plates 111a and 111b and the link plate 130 at one side of the body part 110. The compressive spring 140 may elastically support the link plate 130 toward the stopper 112c at one end of the center column 112, and may be mounted in a state of being compressed to a predetermined extent in an initial state. The compressive spring 140 maintains the rotation blocks 120 and the blades B mounted on the rotation blocks 120 to a predetermined pitch angle by pushing the link plate 130 by means of elastic force, and adjusts the pitch angles of the blades B by being compressively or tensilely deformed in accordance with a wind load applied to the blades B. The adjustment of the pitch angles will be additionally described with reference to the following FIG. 6.

FIG. 6 is a view illustrating an operation of the passive blade pitch control module illustrated in FIG. 1.

An operation of the present exemplary embodiment will be described with reference to FIG. 6. In an initial state in which no external force is applied to the blades B, the link plate 130 is positioned at an end portion of the center column 112 by the compressive spring 140 and the stopper 112c. In addition, the blade B is disposed to have a predetermined pitch angle in accordance with a position of the link plate 130. That is, the compressive spring 140 may be formed to be fastened to the center column 112 in a state of being compressed to a predetermined extent and apply elastic force to the link plate 130 in the initial state, and as a result, the rotation block 120 and the blade B are maintained to have a predetermined pitch angle. In this case, a compression degree or an elastic modulus of the compressive spring 140 may be appropriately set in accordance with a design value or the like which is required for the corresponding wind power generator.

When a wind load is applied to the blade B in the initial state, rotational torque is generated on the rotation block 120 about the pitch axis P, and the rotational torque is transmitted to the compressive spring 140 through the link plate 130. That is, the wind load applied to the blade B may be transmitted to the link plate 130 through the link plate fastening portion 122 at the end portion of the rotation block 120, and the wind load acts as force for moving the link plate 130 along the center column 112. In this case, since the link plate 130 is in a state of being elastically supported by the compressive spring 140, the pitch angle of the rotation block 120 or the blade B is adjusted in a state in which elastic force of the compressive spring 140 and rotational force of the rotation block 120 caused by a wind load are balanced.

For example, in a case in which a wind load applied to the blade B is equal to or more than a predetermined design value, rotational force of the rotation block 120 becomes higher than elastic force of the compressive spring 140, such that the link plate 130 may be moved forward to a predetermined extent to the left in the drawing, and as a result, the rotation block 120 and the blade B are rotated about the pitch axis P to a predetermined extent, thereby changing the pitch angle. In addition, as necessary, the adjustment of the pitch angle may be continuously performed so that rotational force of the rotation block 120 caused by the wind load applied to the blade B and elastic force of the compressive spring 140 are balanced. Otherwise, the pitch angle may be adjusted by setting a compression degree or an elastic modulus of the compressive spring 140 only in a case in which a wind load is equal to or higher than a predetermined design value (for example, damage to the blade B caused by a gust of wind or the like is prevented).

As described above, the pitch control module 100 according to the present exemplary embodiment is formed to transmit a wind load, which is applied to the blade B, to the compressive spring 140 via the rotation block 120 and the link plate 130, such that the blade B is adjusted to have an appropriate pitch angle by a balance between elastic force of the compressive spring 140 and a wind load on the blade B. Therefore, in a case in which a wind load, such as a gust of wind or a typhoon, which is equal to or higher than a set value, is applied, the pitch angle of the blade B is appropriately adjusted, and as a result, it is possible to effectively prevent damage to the blade B. In addition, the pitch control module 100 according to the present exemplary embodiment may naturally adjust the pitch angle by elastic force of the compressive spring 140 without a particular control mechanism or operation, and as a result, the pitch control module 100 may be more conveniently used or maintained.

Furthermore, the pitch control module 100 according to the present exemplary embodiment may be easily designed because the pitch angle of the blade B may be adjusted only by appropriately setting a compression degree or an elastic modulus of the compressive spring 140, and the pitch control module 100 may be easily designed to a type in which the pitch angle is continuously adjusted corresponding to a wind load as necessary, and as a result, the pitch control module 100 is advantageous in improving rotational speed stabilization or power generation quality of the wind power generator. In addition, because a separate hydraulic means, actuator, or the like is not required to adjust the pitch angle, the pitch control module 100 may be manufactured with comparatively low costs, and particularly, a pitch control function may be implemented with low costs even in the case of a small-sized wind power generator in which it is difficult to apply a high-priced pitch control means in practice.

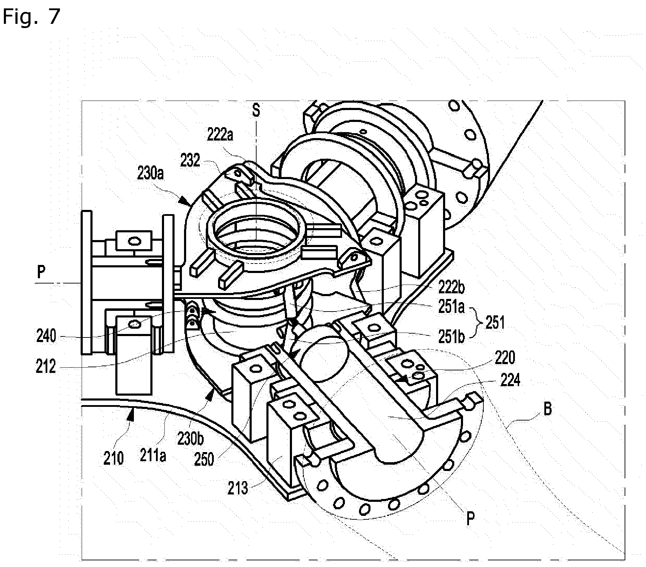

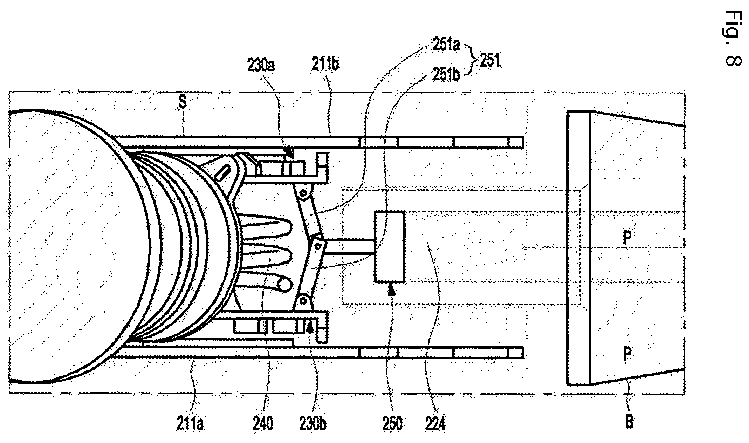

FIG. 7 is a perspective view illustrating a passive blade pitch control module according to a second exemplary embodiment of the present invention. FIG. 8 is a schematic side view of the passive blade pitch control module illustrated in FIG. 7.

Hereinafter, for ease of description, the constituent elements similar to those of the aforementioned pitch control module 100 of the first exemplary embodiment are assigned with corresponding reference numerals, and detailed descriptions thereof will be briefly summarized or omitted.

Referring to FIGS. 7 and 8, a passive blade pitch control module (hereinafter, referred to as a 'pitch control module 200') according to the present exemplary embodiment may have a body part 210, and a plurality of rotation blocks 220 which is rotatably mounted on the body part 210.

The body part 210 corresponds to the body part 110 of the aforementioned pitch control module 100. Similar to the aforementioned body part 110, the body part 210 may include a pair of plates 211 a and 211b, a center column 212 which is formed between the pair of plates 211 a and 211b, and a plurality of support blocks 213 which supports the rotation blocks 220, respectively.

The rotation block 220 corresponds to the aforementioned rotation block 120 of the pitch control module 100. Similar to the aforementioned rotation block 120, the blade may be mounted and supported on the rotation block 220, and the rotation block 120 may be fastened to the support block 213 provided on the body part 210 so as to be rotatable about the pitch axis P.

In addition, inner ends of the rotation blocks 220, which are directed toward the center column 212, may be fastened to the link plates 230a and 230b. However, in the present exemplary embodiment, since first and second link plates 230a and 230b are provided as described below, the rotation blocks 220 may be fastened to the first and second link plates 230a and 230b, respectively. Specifically, the rotation block 220 may have first and second link plate fastening portions 222a and 222b which are spaced apart from each other, and the first and second link plate fastening portions 222a and 222b may be fastened to the first and second link plates 230a and 230b, respectively.

In addition, the rotation block 220 may have a sliding chamber 224 in which a balance weight 250 to be described below is mounted. The sliding chamber 224 may be formed at a center of the rotation block 220 so as to extend to a predetermined extent in a direction of the pitch axis P. The sliding chamber 224 provides a route along which the balance weight 250 is movable to a predetermined extent along the pitch axis P. Meanwhile, an inner end of the sliding chamber 224, which is directed toward the center column 212, may be opened so that the balance weight 250 enters the sliding chamber 224, and the opposite outer end may be opened or closed. However, the present exemplary embodiment provides an example in which the sliding chamber 224 is formed in a hollow hole shape in which both of the inner and outer ends of the sliding chamber 224 are opened and the sliding chamber 224 extends along the pitch axis P.

Meanwhile, the pitch control module 200 according to the present exemplary embodiment may have the link plates 230a and 230b which are fastened to the center column 212, and a compressive spring 240 which elastically supports the link plates 230a and 230b. The link plates 230a and 230b correspond to the aforementioned link plate 130 of the pitch control module 100, and the compressive spring 240 corresponds to the aforementioned compressive spring 140 of the pitch control module 100.

However, two link plates 230a and 230b may be provided in the pitch control module 200 according to the present exemplary embodiment, and the compressive spring 240 is installed between the link plates 230a and 230b and may elastically support the link plates 230a and 230b.

More specifically, the link plates 230a and 230b of the present exemplary embodiment may include first and second link plates 230a and 230b. Each of the first and second link plates 230a and 230b corresponds to the aforementioned link plate 130, and may be formed to be identical or similar to the link plate 130. The first and second link plates 230a and 230b is inserted and fastened to the center column 212, and may be disposed to be spaced apart from each other at a predetermined interval along the center column 212. The first and second link plates 230a and 230b may be elastically supported by the compressive spring 240 to be described below.

In addition, each of the first and second link plates 230a and 230b may have a plurality of rotation block fastening portions 232. Each of the rotation block fastening portions 232 may be hingedly fastened to the first link plate fastening portion 222a or the second link plate fastening portion 222b of the rotation block 220. In this case, similar to the aforementioned pitch control module 100, the first and second link plates 230a and 230b and the rotation blocks 220 may be eccentrically coupled to one another with respect to the pitch axes P.

The compressive spring 240 may be fastened to the center column 212, and disposed between the first and second link plates 230a and 230b so as to elastically support the first and second link plates 230a and 230b. In other words, the forward and rearward movements of the first and second link plates 230a and 230b along the center column 212 may be elastically supported by the compressive spring 240.

The pitch control module 200 may appropriately adjust the pitch angle of the blade B by means of a balance between a wind load applied to the blade B and elastic force of the compressive spring 240. Specifically, when a wind load is applied to the blade B, rotational force about the pitch axis P is applied to the rotation block 220, and the rotational force acts as force that moves the first and second link plates 230a and 230b along the center column 212. That is, with the rotational force of the rotation block 220, the first and second link plates 230a and 230b receive force in a direction in which the first and second link plates 230a and 230b are moved close to each other. In this case, since the first and second link plates 230a and 230b are elastically supported by the compressive spring 240, the rotational force of the rotation block 220 is supported by elastic force of the compressive spring 240, and as a result, a pitch angle of the blade B is adjusted in a state in which rotational force and elastic force are balanced. The operational principle is similar to that of the aforementioned pitch control module 100.

In this case, the pitch control module 200 according to the present exemplary embodiment may further include the balance weight 250 and a link arm 251. The balance weight 250 and the link arm 251 may provide additional external force to the first and second link plates 230a and 230b in accordance with a rotational speed of the blade B about the rotation shaft S. That is, the balance weight 250 and the link arm 251 may adjust a pitch angle of the blade B in accordance with a rotational speed of the blade B about the rotation shaft S (in contrast, the rotation block 220, the link plates 230a and 230b, the compressive spring 240, and the like may adjust a pitch angle of the blade B in accordance with force that rotates the blade B about the pitch axis P).

Specifically, the balance weight 250 may be formed to have a heavy weight, and may be disposed in the sliding chamber 224 provided in the rotation block 220. In addition, the balance weight 250 may be formed to be movable in the sliding chamber 224 to a predetermined extent in a direction of the pitch axis P. The balance weight 250 may receive centrifugal force due to a rotation of the blade B about the rotation shaft S. For example, the balance weight 250 may receive higher centrifugal force as a rotational speed of the blade B is increased, and as a result, the balance weight 250 may be moved to a predetermined extent outward in a radial direction of the rotation shaft S.

The link arm 251 may link the balance weight 250 and the first and second link plates 230a and 230b. The link arm 251 may link the balance weight 250 and the first and second link plates 230a and 230b so that the first and second link plates 230a and 230b move along the center column 212 in conjunction with the movement of the balance weight 250 in a direction toward the pitch axis P. Otherwise, the link arm 251 may link the balance weight 250 and the first and second link plates 230a and 230b so that when the balance weight 250 moves outward in the radial direction of the rotation shaft S, the first and second link plates 230a and 230b move, in conjunction with the movement of the balance weight 250, along the center column 212 in a direction in which the first and second link plates 230a and 230b move close to each other.

For example, the link arm 251 may include a first arm 251a which has one end hingedly coupled to the balance weight 250 and the other end hingedly coupled to the first link plate 230a, and a second arm 251b which has one end hingedly coupled to the balance weight 250 and the other end hingedly coupled to the second link plate 230b.

In this case, when the balance weight 250 moves outward along the sliding chamber 224, the first and second arms 251a and 251b pull the first and second link plates 230a and 230b, respectively, such that the first and second link plates 230a and 230b may move along the center column 212 in a direction in which the first and second link plates 230a and 230b move close to each other. In addition, on the contrary, when the balance weight 250 moves inward along the sliding chamber 224, the first and second link plates 230a and 230b may move in a direction in which the first and second link plates 230a and 230b move away from each other.

Meanwhile, the number of balance weights 250 and the number of link arms 251 may be more than one, as necessary, and the plurality of balance weight 250 and the plurality of link arms 251 may be disposed to correspond to all or some of the plurality of rotation blocks 220. For example, in a case in which three rotation blocks 220 are provided as illustrated in FIG. 4, three sets of balance weights 250 and link arms 251 may be provided corresponding to the three rotation blocks 220. Otherwise, as necessary, the balance weight 250 and the link arm 251 may be provided only in some rotation blocks 220 among the three rotation blocks 220.

Hereinafter, an operation of the pitch control module 200 according to the present exemplary embodiment will be described with reference to FIGS. 7 and 8. First, in an initial state in which no wind load is applied to the blade B and thus the blade B is stopped, the first and second link plates 230a and 230b are elastically supported by the compressive spring 240 in a state in which the first and second link plates 230a and 230b are spaced apart from each other, and the blade B is disposed at an initial pitch angle in accordance with positions of the first and second link plates 230a and 230b.

When a wind load is applied to the blade B, the rotation block 220 receives force that rotates the rotation block 220 about the pitch axis P, and the rotational force of the rotation block 220 is elastically supported by the compressive spring 240 via the first and second link plates 230a and 230b. Therefore, a pitch angle of the blade B is appropriately adjusted in a state in which the wind load and elastic force of the compressive spring 240 are balanced.

Meanwhile, the blade B is rotated about the rotation shaft S as a wind load is applied to the blade B, and the rotation of the blade B generates centrifugal force applied to the balance weight 250. The centrifugal force applied to the balance weight 250 may be transmitted to the first and second link plates 230a and 230b via the link arm 251, and elastically supported by the compressive spring 240 between the first and second link plates 230a and 230b. Therefore, an interval between the first and second link plates 230a and 230b may be adjusted as centrifugal force applied to the balance weight 250 and elastic force of the compressive spring 240 are balanced, and as a result, a pitch angle is adjusted in accordance with a rotational speed of the blade B.

For example, in a case in which a rotational speed of the blade B is increased, centrifugal force and elastic force of the compressive spring 240 are balanced in a state in which the centrifugal force applied to the balance weight 250 is increased and thus the balance weight 250 is moved to a predetermined extent outward in the radial direction. In this case, an interval between the first and second link plates 230a and 230b is decreased because of the movement of the balance weight 250, and the rotation block 220 is correspondingly rotated about the pitch axis P to a predetermined extent, such that a pitch angle of the blade B is adjusted.

Meanwhile, the adjustment of the pitch angle according to the rotational speed may be complexly performed in conjunction with the adjustment of the pitch angle according to the aforementioned wind load. That is, the compressive spring 240 may elastically support the centrifugal force of the balance weight 250 which is caused by the rotational speed and the rotational force of the rotation block 220 which is caused by the wind load, and the pitch angle of the blade B may be appropriately adjusted in a state in which the elastic force of the compressive spring 240, the centrifugal force of the balance weight 250, and the rotational force of the rotation block 220 are balanced.

As described above, the pitch control module 200 according to the present exemplary embodiment may appropriately adjust the pitch angle in accordance with the rotational speed of the blade B as well as the wind load applied to the blade B (i.e., force that rotates the blade B about the pitch axis P). Therefore, the pitch control module 200 according to the present exemplary embodiment may more precisely and effectively control a pitch angle of the blade B.

In addition, the pitch control module 200 according to the present exemplary embodiment still does not require an external forced driving source even though the function of adjusting a pitch angle in accordance with a rotational speed is added. That is, the pitch control module 200 according to the present exemplary embodiment does not require a separate forced driving source for adjusting a pitch angle because a pitch angle is naturally adjusted in a state in which a wind load applied to the blade B or centrifugal force according to a rotational speed is balanced with elastic force of the compressive spring 240. Therefore, the pitch control module 200 according to the present exemplary embodiment may be implemented with low costs, and may be easily applied even to a middle-sized or small-sized wind power generator.

Furthermore, the pitch control module 200 according to the present exemplary embodiment has an advantage in that because control of a pitch angle is implemented only by comparatively restrictive elements such as an elastic modulus of the compressive spring 2401 and a weight of the balance weight 250, a design value for deriving required performance is easily set, and manufacturing and maintenance are also easily performed.

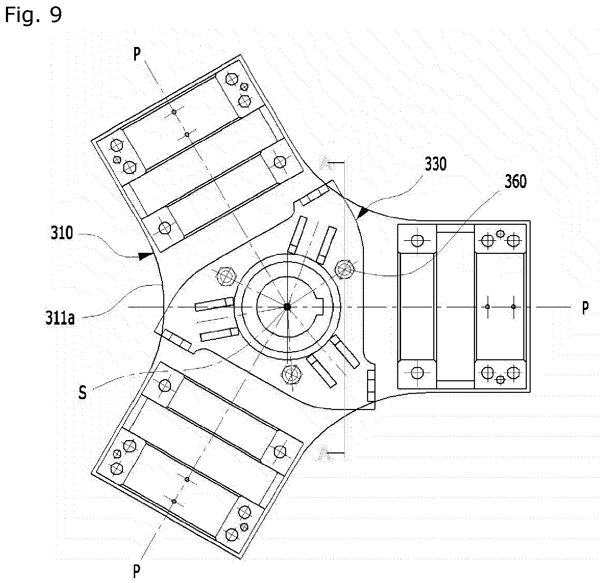

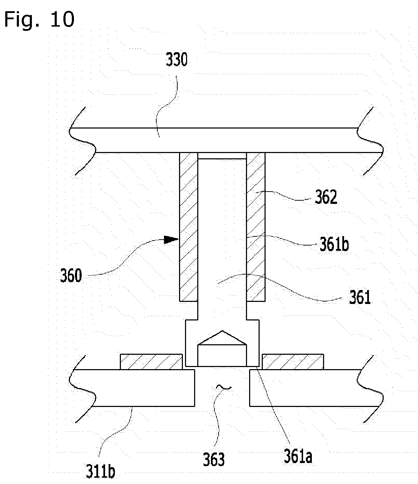

FIG. 9 is a schematic rear view illustrating a passive blade pitch control module according to a third exemplary embodiment of the present invention. FIG. 10 is a schematic cross-sectional view taken along line A-A illustrated in FIG. 9.

Hereinafter, for ease of description, the constituent elements similar to those of the aforementioned pitch control module 100 are assigned with corresponding reference numerals, and detailed descriptions thereof will be briefly summarized or omitted.

Referring to FIGS. 9 and 10, a passive blade pitch control module (hereinafter, referred to as a 'pitch control module 300') according to the present exemplary embodiment may include a body part 310, a plurality of rotation blocks (not illustrated) which is mounted on the body part 310, a link plate 330 which is linked to the respective rotation blocks, and a compressive spring (not illustrated) which elastically supports the link plate 330. The body part 310, the rotation block, the link plate 330, and the compressive spring may be formed to be identical or similar to the body part 110, the rotation block 120, the link plate 130, and the compressive spring 140 of the pitch control module 100, respectively.

However, it is noted that in FIGS. 9 and 10, some of the constituent elements are omitted for ease of description. FIG. 9 illustrates only a plate 311a (corresponding to the plate 111 a of the pitch control module 100) disposed at one side of the body part 310, but omits a plate 311b (see FIG. 10, corresponding to the plate 111b of the pitch control module 100) disposed to face the plate 311 a.

Meanwhile, the pitch control module 300 according to the present exemplary embodiment may further include an initial pitch angle setting unit 360. The initial pitch angle setting unit 360 adjusts a position of the link plate 330 in an initial state (state in which no wind load is applied to the blade), thereby setting an initial pitch angle of the blade.

Specifically, the initial pitch angle setting unit 360 may include a nut member 362 which is provided at one side of the link plate 330, and a bolt member 361 which is thread-coupled to the nut member 362.

The nut member 362 may protrude or extend from one surface of the link plate 330 to a predetermined extent in a direction of the rotation shaft S of the blade. In addition, the nut member 362 may be disposed at a side opposite to a side where the compressive spring is disposed. That is, the link plate 330 may be elastically supported as one surface of the link plate 330 is in contact with the compressive spring, and the nut member 362 may be disposed at a side opposite to the elastic support surface (see FIGS. 2 and 6). Meanwhile, the nut member 362 may be formed integrally with the link plate 330 or may be fixedly coupled to the link plate 330 by welding or the like.

The bolt member 361 may be inserted into the nut member 362 in the direction of the rotation shaft S, and thread-coupled to the nut member 362. The bolt member 361 may be disposed between the plate 311b and the surface opposite to the elastic support surface of the link plate 330 in the direction of the rotation shaft S. In addition, one side 361a of the bolt member 361 may be in contact with and supported on one surface of the plate 311b, and the other side 361b of the bolt member 361 may be supported by being thread-coupled to the nut member 362. The bolt member 361 may support the link plate 330 and the plate 311b against elastic force of the compressive spring. That is, the elastic support surface of the link plate 330 is elastically supported by the compressive spring, and the surface opposite to the elastic support surface is supported by the bolt member 361, thereby maintaining a position thereof.

In this case, a user may adjust a position of the link plate 330 by moving the bolt member 361 in the initial state in which no wind load is applied. That is, when the user rotates the bolt member 361 toward one side by using a tool or the like, the bolt member 361 is moved to a predetermined extent with respect to the nut member 362 in the direction of the rotation shaft S. In this case, the bolt member 361 pushes the link plate 330 against elastic force of the compressive spring, and as a result, a position of the link plate 330 may be moved along the center column (not illustrated) in the direction of the rotation shaft S. When a position of the link plate 330 is moved as described above, the rotation block, which is linked to the link plate 330, is rotated about the pitch axis P to a predetermined extent, thereby adjusting an initial pitch angle of the blade (see FIG. 6).

Meanwhile, an access hole 363 may be provided in the plate 311b, which constitutes the body part 310, in order to manipulate the bolt member 361 as described above. The access hole 363 is penetratively formed in the plate 311b so as to correspond to a position where the bolt member 361 is disposed, and enables the user to manipulate the bolt member 361 by using a tool or the like.

In addition, a plurality of initial pitch angle setting units 360 may be provided as necessary as described above, and the plurality of initial pitch angle setting units 360 may be disposed to be spaced apart from each other in a circumferential direction based on the rotation shaft S. More particularly, the plurality of initial pitch angle setting units 360 may be provided in accordance with the number of rotation blocks or the number of blades, and may be disposed to correspond to the rotation blocks or the blades, respectively. For example, the present exemplary embodiment provides an example in which a total of three initial pitch angle setting units 360 are disposed to be spaced apart from each other based on the rotation shaft S so as to correspond to three rotation blocks or three blades.

As described above, the passive blade pitch control module 300 according to the present exemplary embodiment may appropriately adjust a pitch angle of the blade while elastic force of the compressive spring and a wind load applied to the blade are balanced without a separate forced driving source, and may appropriately set an initial pitch angle by means of the initial pitch angle setting unit 360 even in an initial state in which no wind load is applied. Therefore, the passive blade pitch control module 300 according to the present exemplary embodiment may contribute to the improvement of power generation efficiency or the like by easily adjusting the initial pitch angle of the blade in accordance with installation places or design requirements.

While the exemplary embodiments of the present invention have been described above, those skilled in the art may variously modify and change the present invention by adding, changing, deleting or modifying constituent elements without departing from the spirit of the present invention disclosed in the claims, and the modification and change also belong to the scope of the present invention.

## Claims

1. A passive blade pitch control module comprising:
a body part which has a center column and is connected to a rotation shaft of a wind power generator;
one or more rotation blocks which are fastened to the body part so as to be rotatable about pitch axes, respectively, and on which blades are mounted and supported;
a link plate which is fastened to the center column so as to be movable along the center column and eccentrically coupled to the rotation block with respect to the pitch axis; and
a spring which elastically supports the link plate.

2. The passive blade pitch control module according to claim 1, wherein the rotation block is formed to be rotated about the pitch axis to a predetermined extent by a wind load applied to the blade, the link plate is moved along the center column as the rotation block is rotated, and the spring elastically supports the link plate against the movement of the link plate.

3. The passive blade pitch control module according to claim 1, wherein the body part has a support block which supports the rotation block so that the rotation block is rotatable, and a sliding pad, which is made of a Teflon material and is in contact with and slides on the rotation block or the support block, is provided between the rotation block and the support block.

4. The passive blade pitch control module according to claim 1, wherein the spring includes a compressive spring, the compressive spring is fastened to the center column in an initial state in a state in which the compressive spring is compressed to a predetermined extent, and a stopper, which prevents the link plate from being withdrawn by the compressive spring in the initial state, is provided at one end of the center column.

5. The passive blade pitch control module according to claim 1, wherein the rotation block has a sliding chamber which extends in a direction of the pitch axis, the link plate includes first and second link plates which are disposed to be spaced apart from each other along the center column, the spring elastically supports the first and second link plates, and the passive blade pitch control module further includes a balance weight which is disposed in the sliding chamber, and a link arm which links the balance weight and the first and second link plates so that at least one of the first and second link plates is moved along the center column in conjunction with the movement of the balance weight in the direction of the pitch axis.

6. The passive blade pitch control module according to claim 5, wherein the balance weight is formed to be movable to a predetermined extent along the pitch axis in the sliding chamber by centrifugal force caused by the rotation of the blade, and the spring is formed to elastically support the movement of at least one of the first and second link plates in conjunction with the movement of the balance weight.

7. The passive blade pitch control module according to claim 5, wherein the link arm includes:
a first arm which has one side hingedly coupled to the first link plate and the other side hingedly coupled to the balance weight; and
a second arm which has one side hingedly coupled to the second link plate and the other side hingedly coupled to the balance weight.

8. The passive blade pitch control module according to claim 1, further comprising:
an initial pitch setting unit which adjusts an initial position of the link plate,
wherein the initial pitch setting unit includes:
a bolt member which supports the link plate in a direction facing the spring; and
a nut member which is provided at one side of the link plate, extends to a predetermined extent in the direction of the rotation shaft, and is thread-coupled to the bolt member.

9. The passive blade pitch control module according to claim 8, wherein the body part has a pair of plate which is disposed to be spaced apart from each other in the direction of the rotation shaft, the bolt member is disposed between one plate of the pair of plates and the link plate, and one plate has an access hole which is disposed at a side opposite to a side facing the other plate and allows an access of a tool to the bolt member.
